Europäisches Patentamt

European Patent Office

Office européen des brevets

(19)

(11) **EP 1 159 842 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(21) Anmeldenummer: **00910859.8**

(22) Anmeldetag: **17.03.2000**

(51) Int Cl.⁷: $H04Q\ 7/38$

(86) Internationale Anmeldenummer:
**PCT/EP2000/002411**

(87) Internationale Veröffentlichungsnummer:
**WO 2000/056104 (21.09.2000 Gazette 2000/38)**

(54) **KOMMUNIKATIONSSYSTEM FÜR DEN MOBILFUNK ZUR FESTLEGUNG EINES TEILNEHMERGEBIETES UND GEEIGNETES VERFAHREN HIERFÜR**

COMMUNICATIONS SYSTEM FOR A MOBILE RADIO TELEPHONE SYSTEM FOR FIXING A SUBSCRIBER AREA AND SUITABLE METHOD

SYSTEME DE COMMUNICATION POUR LA RADIOTELEPHONIE MOBILE DETERMINANT UNE ZONE D'ABONNE ET PROCEDE APPROPRIE

(84) Benannte Vertragsstaaten:
**AT BE CH CY DE DK ES FI FR GB GR IE IT LI LU MC NL PT SE**

(30) Priorität: **17.03.1999 DE 19911938**

(43) Veröffentlichungstag der Anmeldung:
**05.12.2001 Patentblatt 2001/49**

(73) Patentinhaber: **Viag Interkom GmbH & Co.**
**80687 München (DE)**

(72) Erfinder:
• **ODORFER, Thomas**
**D-81677 München (DE)**
• **MAYRHOFER, Gerhard**
**D-80937 München (DE)**

(74) Vertreter: **Laufhütte, Dieter, Dr.-Ing.**
**Lorenz-Seidler-Gossel**
**Widenmayerstrasse 23**
**80538 München (DE)**

(56) Entgegenhaltungen:
**DE-A- 4 420 462        DE-C- 19 731 461**
**US-A- 5 568 153**

• **"EIN TELEFON UND EINE RUFNUMMER FÜR ZUHAUSE UND UNTERWEGS" INTERNET, [Online] 18. März 1999 (1999-03-18), XP002134924 Gefunden im Internet: <URL:http://www2.viaginterkom.de/aps/pres se/mitteilungen/news00441.html> [gefunden am 2000-04-04]**

## Beschreibung

Die vorliegende Erfindung betrifft ein Kommunikationssystem für den Mobilfunk und ein Verfahren zum Betreiben des Kommunikationssystems.

Bislang werden bei bekannten Mobilfunksystemen, welche beispielsweise im GSM-Mode (Global System for Mobile Communication) arbeiten keine Technologien zur genauen Ortsbestimmung eines mobilen Endgerätes bzw. Nutzereinheit eingesetzt. Das bedeutet, dass einem Teilnehmer, dem eine Teilnehmerrufnummer zugeordnet ist, ständig innerhalb des Gesamtgebietes, welches von der entsprechenden Vermittlungseinheit, sogenannten Betreibern, bedient wird, erreicht werden kann.

Somit kommt es mit einer Vielzahl von Funkzellen für die Übertragung der Information dazu, dass für ein vielfach durch nationale Grenzen definiertes Gesamtgebiet pro abrechenbarer Tarifeinheit hohe Gebühren eingefordert werden müssen, da jede Kommunikation zwischen den mobilen Benutzereinheiten unabhängig von der Distanz zwischen den Kommunikationspartnern berechnet werden muss. Hinzu kommt, dass innerhalb eines GSM-Mobilfunksystems Informationen über den Aufenthalt eines Teilnehmers nur in einer groben Form zur Verfügung stehen, die hauptsächlich durch die inhärente Organisation der Vermittlungseinheit gegeben ist. Im Ruhemodus, d.h. der Teilnehmer führt kein Gespräch bzw. das Endgerät sendet keine Update-Informationen, erkennt das Mobilfunknetz nur, in welchem durch die Vermittlungseinheit vorgegebenen Bereich sich der Kunde zuletzt befunden hat. Dieser von der Vermittlungseinheit vorgegebene Bereich ist üblicherweise sehr groß, d.h. mehrere Kilometer bis zu 100 Kilometer, erstreckt sich oft über den geographischen Bereich mehrerer Ortsnetzkennzahlen und unterliegt oft Änderungen aufgrund dynamischer Funknetzplanungen. Ein sich aufgrund der Bewegungen des Teilnehmers ändernder Standort und somit auch der Nutzereinheit kann aufgrund der bislang verwendeten Parameter zur Bestimmung des Aufenthaltsorts der Nutzereinheit lediglich dazu dienen, im aktiven Modus, d.h. während eines Gesprächs, die Nutzereinheit zu lokalisieren. Die bislang verwendeten Kommunikationssysteme sind allerdings nicht geeignet, aufgrund ihrer Funktionsweise auch im Ruhemodus die Position der Nutzereinheit zu bestimmen und somit dem Teilnehmer einen Hinweis hinsichtlich seiner momentanen Umgebung geben zu können.

Aus der DE 197 31 461 C1 ist ein Kommunikationssystem und ein Verfahren zum Betreiben eines Kommunikationssystems bekannt, in dem Teilnehmergebiete durch Zusammenfassung von Funkzellen und/oder Location Areas gebildet werden. Die Zellenkennungen und Gebietskennungen werden zusammen mit den Zonenbezeichnungen nach ihrer Aufbereitung zum mobilen Endgerät gesendet und dort gespeichert. Die Überprüfung, ob sich das mobile Endgerät in einem der definierten Teilnehmergebiete bzw. Aufenthaltsgebiete befindet, erfolgt durch Vergleich der empfangen Zellen- oder Gebietskennungen mit den mobilstationsseitig gespeicherten Kennungen.

Ein derartiges Kommunikationssystem bringt den Nachteil mit sich, dass bei Restrukturierungen des Netzes, die mit einer Umbenennung der Zellen- oder Location Areas einhergeht auch die mobilstationsseitig gespeicherten Teilnehmergebiete neu definiert und gespeichert werden müssen. Ein weiterer Nachteil besteht darin, dass insbesondere bei großen Teilnehmergebieten eine Vielzahl von Kennungen von Funkzellen und/oder Location Areas auf dem SIM-Modul gespeichert werden müssen, was einen erheblichen Speicherplatz erfordert.

Aus der U.S. 5,568,153 ist ein Kommunikationssystem und ein Verfahren zum Betreiben eines Kommunikationssystems bekannt, das die Lokalisierung eines mobilen Endgerätes auf der Grundlage der Dauer der Ausbreitung eines Signals von dem Aussenden bis zu dem Empfang vorsieht. Dabei wird die Dauer bestimmt, innerhalb derer ein Signal von dem mobilen Endgerät zu Sende- und Empfangseinheiten übermittelt wird. Die Zeitdauer kennzeichnet den Abstand des mobilen Endgerätes von der jeweiligen Sende- und Empfangseinheit. Unter Verwendung der Sende- und Empfangseinheiten mehrerer Funkzellen kann anhand der zugehörigen Ausbreitungszeiten festgestellt werden, in welchem Bereich sich das mobile Endgerät befindet. Das Verfahren setzt voraus, dass sich das mobile Endgerät zum Zwecke seiner Lokalisation im Empfangsbereich mehrerer Sende- und Empfangsstationen befindet und dass diese derart synchronisiert werden, das der Startzeitpunkt des Aussendens des Signals des mobilen Endgerätes feststeht. Ein weiterer Nachteil besteht darin, dass das mobile Endgerät zu seiner Ortsbestimmung ein entsprechendes Signal aussendet, wodurch der Funkverkehr zusätzlich belastet wird.

Es ist die Aufgabe der vorliegenden Erfindung, ein Kommunikationssystem bzw. ein Verfahren zum Betreiben des Kommunikationssystems weiterzubilden, welche dem Nutzer zusätzlich zu den Vorteilen der Mobilfunkkommunikation einen absolut gleichwertigen Service zur Sprachkommunikation wie beim bisherigen Festnetzbetrieb bieten kann.

Ferner ist es eine Aufgabe, ein Kommunikationssystem bereitzustellen, ohne aufwendige Hardware-Änderungen vornehmen zu müssen.

Gelöst wird diese Aufgabe vorrichtungstechnisch mit den Merkmalen des Anspruchs 1 und verfahrenstechnisch mit den Merkmalen des Anspruchs 16.

Erfindungsgemäß wird innerhalb eines vorgegebenen Gesamtgebietes, welches von einer Vermittlungseinheit bedient wird, zumindest ein Teilnehmergebiet festgelegt, welches von der Vermittlungseinheit bedient wird, und diesem Teilnehmergebiet zumindest eine Teilnehmerrufnummer zugeordnet. Durch diese Unterteilung des Gesamtgebietes wird erreicht, dass innerhalb des Teilnehmergebietes ein gegenüber dem Gesamtgebiet verminderter oder geänderter Tarif bzw. eine besondere Serviceleistung eingerichtet werden kann, mit dem der Nutzer beispielsweise günstiger telefonieren kann. Ferner wird durch die Unterteilung des Gesamtgebietes mit zumindest einem Teilnehmergebiet, welchem zumindest eine Teilnehmerrufnummer zugeordnet wird, erreicht, dass beispielsweise dem Teilnehmer angezeigt werden kann, wann er sich innerhalb des Teilnehmergebietes befindet und wann er es verlässt. In dem Gesamt gebiet ist wenigstens eine Funkzelle angeordnet, die ein deren Koordinaten enthalten Signal übermittelt. Ferner sind Mittel vorgesehen, mittels derer berechnet wird, ob die seitens der für die übertragung verantwortlichen Funkzelle übermittelten Koordinaten innerhalb des festgelegten Teilnehmer gebietes liegen. Aufgrund der eindeutigen Zuordnung von Teilnehmerrufnummern mit dem Teilnehmergebiet wird ebenso erreicht, dass beispielsweise bestehende regulatorische Richtlinien eingehalten werden können. Das bedeutet ferner, dass beispielsweise ein Teilnehmer seine Nutzereinheit innerhalb des Teilnehmergebietes gleichermaßen für sich zu Hause und im Büro verwenden kann, ohne dass er herkömmliche teilweise individuell einzustellende Weiterleitungsprozeduren vornehmen muss. Die bislang bestehenden Weiterleitungsprozeduren sind in der Regel in der Handhabung sehr aufwendig und umständlich und werden deshalb nicht von jedem Teilnehmer genutzt. Aufgrund des anmeldungsgemäßen, fest vorgegebenen Teilnehmergebietes kann somit die Vermittlungseinheit dem Teilnehmer gestatten, beispielsweise mehrere mobile Nutzereinheiten gleichzeitig zu betreiben, die jeweils mit einem günstigeren Tarif taxiert werden, wenn sie innerhalb des Teilnehmergebietes betrieben werden, und beispielweise die zugeordnete Teilnehmerrufnummer ausgewählt wurde. Die Kommunikation zwischen den beiden innerhalb eines Teilnehmergebietes betriebenen mobilen Nutzereinheiten kann herkömmlich durchgerührt werden, d. h. es kann einer mobilen Nutzereinheit eine Preferenz zugeordnet werden und für den Fall, dass diese mobile Nutzereinheit nicht antworten sollte, nach einer bestimmten Anzahl von Signalen an die zweite mobile Nutzereinheit weitergegeben werden.

Weitere vorteilhafte Ausführungsformen sind Gegenstand der Unteransprüche.

Werden gemäß Anspruch 2 beispielsweise vier Teilnehmergebiete vorgesehen, so wird der Vorteil erreicht, dass erneut innerhalb dieser Teilnehmergebiete die jeweiligen Dienstleistungen der Vermittlungseinheit mit einem reduzierten Tarif verwendet werden können, wobei die Kommunikation zwischen den Teilnehmergebieten ebenfalls einem speziell dafür ausgerichteten Tarif zugeordnet werden können. Hierzu bietet es sich vorteilhafterweise an, beispielsweise ein erstes Teilgebiet einem Heimbereich (sog. HOMEZONE) des Teilnehmers und ein zweites Teilnehmergebiet einem Geschäftsbereich (sog. OFFICEZONE) des Teilnehmers zuzuordnen. Aufgrund dieser Zuordnung kann die Vermittlungseinheit somit dem Teilnehmer eine spezielle Dienstleistung zukommen lassen, die speziell auf sein gewohntes Kommunikationsverhalten abgestellt ist.

Wird gemäß Anspruch 3 die Möglichkeit geschaffen, dass sich die ausgewählten Teilnehmergebiete überlappen können, so ist eine flexible Handhabung der Größenauswahl der einzelnen Teilnehmergebiete möglich. Auch kann beispielweise dadurch ein weiterer Städtebereich (sog. CITYZONE) als beispielsweise zweites Teilnehmergebiet zugeordnet werden, wobei dieser Städtebereich beispielsweise den Heimbereich mitenthalten kann, wobei diesbezüglich wiederum eine spezielle Tarifstaffelung von der Vermittlungseinheit angeboten werden kann.

Wird gemäß Anspruch 4 jedes Teilnehmergebiet mit einer unterschiedlichen Verwendungspriorität ausgestattet, so kann beispielsweise die Vermittlungseinheit oder der Teilnehmer individuell auswählen, welches Teilnehmergebiet aufgrund einer vorbestimmten Priorität bei einem Gespräch bzw. Kommunikation verwendet werden soll. Auf diese Weise kann beispielsweise der Teilnehmer hinsichtlich der vorab bestimmbaren externen Rufnummern eine Zuordnung vornehmen, welche beispielsweise exakt die Abrechnung nach unterschiedlichen Tarifen aufschlüsseln kann.

Werden gemäß Anspruch 5 die einzelnen Teilnehmergebiete und gegebenenfalls die Verwendungsprioritäten in das Teilnehmerkenndatenmodul (SIM) eingeschrieben bzw. abgespeichert, so verringert sich der Verwaltungsaufwand der Vermittlungseinheit entsprechend, da der Schreib- bzw. Speichervorgang jeweils nur bei der Aktivierung vorgenommen werden muss. Ferner kann der Teilnehmer für sich beispielsweise eine Änderung der Prioritäten bezüglich der einzelnen Teilnehmergebiete ohne Rückkopplung mit der Vermittlungseinheit an der Nutzereinheit vornehmen.

Umfasst das Teilnehmergebiet gemäß Anspruch 6 mehrere Funkzellen, so wird erreicht, dass diejenige Funkzelle ausgewählt werden kann, mit der die beste Übertragungsqualität erzielbar ist. Werden innerhalb des Teilnehmergebiets mehrere Nutzereinheiten betrieben bzw. bedient, so können gesonderte Verbindungsgestaltungen erzielt werden.

Werden beispielsweise gemäß Anspruch 7 zwei Teilnehmerrufnummern einem Teilnehmergebiet zugeordnet, wobei die erste Teilnehmerrufnummer für die mobile Teilnehmerrufnummer und die zweite Teilnehmerrufnummer für eine geographische Rufnummer beispielsweise im herkömmlichen Sinn, vorgesehen ist, so ist es tariflich unerheblich, ob der Teilnehmer über die mobile Teilnehmerrufnummer oder über die geographische Rufnummer angerufen wird.

Aufgrund von der Vermittlungseinheit vorgegebenen Übertragungsmechanismen kann es teilweise vorkommen, dass bei einer Neudefinierung bzw. bei Verlassen des Teilgebietes eine Verzögerung in der Übertragung eintritt. Um dies zu vermeiden, wird beispielsweise gemäß Anspruch 8 das Teilnehmerkenndatenmodul mit einem Hilfsspeicher (Cache) versehen, wobei für jedes Teilnehmergebiet entsprechend der möglicherweise von dem Teilnehmer vorab definierten Funkzellen eines Teilnehmergebietes ein Speicherbereich vorgesehen sein kann. Ein Abgleich zwischen der einem Teilnehmergebiet zugehörigen Funkzelle und einer neu erkannten Funkzelle kann somit innerhalb der Nutzereinheit geschehen, und beeinflusst in keinster Weise die Übertragung bzw. die Kommunikation. Sollte beispielsweise eine Funkzelle eines vorgegebenen Teilgebietes erkannt werden, so kann das entsprechende Teilgebiet dann der Nutzereinheit zugeordnet werden bzw. von der Nutzereinheit angezeigt werden.

Es hat sich als vorteilhaft erwiesen, wenn gemäß Anspruch 9 das Teilnehmergebiet durch einen Ortspunkt und durch einen von dem Ortspunkt ausgehenden Ortsradius festgelegt wird. Auf diese Weise wird ein Kreis um den Ortspunkt, welcher beispielsweise mit der momentanen Position der Nutzereinheit übereinstimmen kann, erzeugt. Bei vorgegebenem Ortspunkt und Ortsradius wird dann überprüft, welche Funkzellen sich innerhalb des so definierten Kreises befinden, wobei die Funkzelle mit der besten Übertragungsqualität ausgewählt wird.

Da die Funkzellendichte über das Gesamtgebiet einer Vermittlungseinheit unterschiedlich sein kann, kann gemäß Anspruch 10 die Bestimmung des Ortsradius nach Festlegen eines Ortspunktes durch Abtasten mehrerer Funkzellen, welche in der Umgebung des Ortspunktes liegen, erfolgen. Aufgrund dieser Festlegung wird erreicht, dass bei einer geringen Funkzellendichte die Festlegung der Teilnehmergebiete so durchgeführt wird, dass innerhalb des Teilnehmergebietes zumindest eine mit entsprechenden Übertragungsqualitäten vorhandene Funkzelle liegt, oder aber eine erforderliche Anzahl der Funkzellen muss erreicht werden. Die Anzahl der Funkzellen kann von der Vermittlungseinheit vorgegeben sein.

Wird beispielsweise gemäß Anspruch 11 innerhalb des Teilnehmergebietes zusätzlich eine Feststation vorgesehen, so wird erreicht, dass die bereits vorhandene geographische Rufnummer als eine zweite Teilnehmerrufnummer zugeordnet werden kann, wobei die persönliche Rufnummer als persönliche Endrufnummer für die mobile Teilnehmerrufnummer ebenfalls verwendet werden kann. Dadurch wird auf einfache Weise erreicht, dass sowohl der Teilnehmer als auch diejenigen, die den Teilnehmer anrufen wollen, lediglich eine persönliche Rufnummer notieren bzw. vormerken müssen.

Wird gemäß Anspruch 13 die Nutzereinheit mit einer Anzeigenvorrichtung vorgesehen, die anzeigt, ob sich die Nutzereinheit innerhalb des Teilnehmergebietes befindet, so wird dem Teilnehmer signalisiert, ob er mit einem günstigeren Tarif oder aber mit einem teureren Tarif telefoniert, und ebenso, ob er eine besondere Serviceleistung bekommt oder nicht. Die Überprüfung kann anmeldungsgemäß nicht nur im aktiven Modus, d. h. während eines Gespräches, vorgenommen werden, sondern kann aufgrund der festgelegten Teilnehmergebiete auch in den Ruhephasen vorgenommen werden.

Wird das Kommunikationssystem gemäß Anspruch 15 mit einem ersten und einem zweiten Kennzeichen ausgestattet, so kann beispielsweise mit dem ersten Kennzeichen signalisiert werden, ob die Nutzereinheit für das Teilnehmergebiet eine von der Vermittelseinheit abhängige Berechtigung hat und das zweite Kennzeichen dafür heran gezogen werden, ob bereits eine Festlegung auf das Teilnehmergebiet erfolgt ist. Mit diesen beiden Kennzeichen wird beispielsweise unter Verwendung des GSM vorgegeben, ob der Teilnehmer für den mit dem anmeldungsgemäßen Kommunikationssystem erreichten Service berechtigt ist, und somit die Vorzüge genießen kann. Mit dem zweiten Kennzeichen kann verhindert werden, dass ein bereits vorgegebenes Teilgebiet erneut überschrieben bzw. aktiviert wird. Diese Verwendung dieser beiden Kennzeichen sind insbesondere dann von Vorteil, wenn die Aktivierung des anmeldungsgemäßen Kommunikationssystems von der Nutzereinheit erfolgen soll.

Wird gemäß Anspruch 17 die Festlegung des Teilnehmergebietes durch die Vermittelseinheit vorgenommen, so muss der Teilnehmer nicht direkt Einstellungsvorgänge übernehmen und kann beispielsweise ein von einer Vermittlungseinheit eingestelltes Teilnehmergebiet verwenden. Anders ausgedrückt, der Teilnehmer kann direkt mit der Benutzung der Nutzereinheit beginnen.

Durch die Vorgabe eines Ortspunktes, welcher sich beispielsweise auf eine Straße beziehen kann, in der der Teilnehmer entweder seine Heimadresse oder seine Geschäftsadresse hat, wird gemäß Anspruch 18 unter Verwendung eines graphischen Informationssystems (GIS) und unter Beachtung der Tatsache, dass innerhalb des Ortsradius mehrere Funkzellen enthalten sind, erreicht, dass in Abhängigkeit der Funkzellendichte die einzelnen Teilnehmergebiete festgelegt werden. Aufgrund der wechselseitigen Speicherung des Ortspunktes und des Ortsradius sowohl in einer Datei der Vermittlungseinheit als auch in dem Teilnehmerkenndatenmodul der Nutzereinheit wird erreicht, dass die Teilnehmergebiete sowohl von der Vermittlungseinheit direkt als auch von der Nutzereinheit ebenfalls direkt überprüft werden können und ohne weitere Kommunikation bzw. Austausch von Daten nachträglich beispielsweise bei der Gebührenermittlung getroffen werden. Grundsätzlich kann der Ortspunkt anmeldungsgemäß als geographisch bekannter Fixpunkt definiert sein, insbesondere die von dem Teilnehmer nächstgelegene Straßenkreuzung oder aber auch Postleitzahlenbereiche.

Wird gemäß Anspruch 19 die Festlegung des Teilnehmergebietes durch die Nutzereinheit vorgenommen, so wird dem Teilnehmer entsprechend seines Wohnortes ein hoher Grad an Flexibilität bei der Auswahl der Teilnehmergebiete an die Hand gegeben.

Wird gemäß Anspruch 20 die darin beschriebenen einzelnen Verfahrensschritte bei der Festlegung des Teilnehmergebietes herangezogen, so sind diese insbesondere für die Vermittlungseinheiten interessant, welche nicht auf ein graphisches Informationssystem zurückgreifen wollen bzw. können.

Wird gemäß Anspruch 21 das Quadrat des Ortsradius an das Teilnehmerkenndatenmodul übermittelt, so werden der Nutzereinheit energiekonsumierende Rechenoperationen erspart, und zwar insbesondere bei der Ermittlung, ob eine neu aktivierte Funkzelle innerhalb des Teilnehmergebiets liegt.

Gemäß Anspruch 22 kann angezeigt werden, ob sich die Nutzereinheit in dem Teilnehmergebiet befindet, so wird dem Teilnehmer ständig vor Augen geführt, ob er zu einem günstigeren Tarif telefonieren könnte.

Gemäß Anspruch 23 wird in vorteilhafter Weise für den Fall, dass aufgrund einer Bewegung der Nutzereinheit des ausgewählten Teilnehmergebietes von einer angesprochenen Funkzelle zu einer neuen Funkzelle gewechselt wird, und ob sich die Nutzereinheit weiterhin in dem Teilnehmergebiet aufhält, überprüft, ob die neue Funkzelle innerhalb des vorgegebenen Teilnehmergebietes liegt. Hierzu wird in einer ersten Stufe der Differenzwert $\Delta x$ zwischen der neuen Funkzelle hinsichtlich der x-Koordinate und der X-Koordinate (z. B. $x_C$) des vorgegebenen Ortspunkts ($x_H$) bestimmt, wobei ebenfalls der Differenzwert $\Delta y$ zwischen den y-Koordinaten berechnet wird.

$$\Delta x = |(x_H - x_C)|$$

$$\Delta y = |(y_H - y_C)|$$

Sobald einer dieser Werte beispielsweise größer als 100 km ist, so wird angenommen, dass die neue Zelle sich außerhalb des Teilnehmergebietes befindet. Dieser Verfahrensschritt wird durchgeführt, um die Möglichkeit eines arithmetischen Überlaufs innerhalb der Nutzeinheit zu vermeiden. In der zweiten Stufe, welche ausgeführt wird, falls das Ergebnis der ersten Stufe negativ ist, wird das Quadrat des Abstandes zwischen den Koordinaten der neuen Funkzelle und des Ortspunktes entsprechend dem Satz von Pythagoras berechnet:

$$d^2 = (y_H - y_C)^2 + (x_H - x_C)^2$$

Falls der Wert des berechneten Abstandes $d^2$ kleiner als der Wert des vorgegebenen bzw. ermittelten Ortsradius von $r^2$ ist, dann ist die neue Funkzelle eine Funkzelle innerhalb des Teilnehmerbereichs. Ferner kann dann überprüft werden, ob die neue Funkzelle bereits in den Speicherbereich zu jedem Teilnehmergebiet enthalten ist. Falls die neue Funkzelle bereits in dieser Datei erscheint, muss kein weiterer Schritt unternommen werden. Andererseits wird die neue Funkzelle in den Speicherbereich zu den Teilnehmergebieten aufgenommen. Diese Berechnungen werden für jedes der vorgegebenen Teilnehmergebiete durchgeführt, wobei die Berechnung vorzugsweise von dem Teilnehmergebiet mit der höchsten Verwendungspriorität bis zu der niedrigsten vollzogen wird. Allerdings wird kein weiterer Abgleich vorgenommen, sobald eine Funkzelle gefunden wurde, welche zu einem Teilnehmergebiet gehört. Dadurch wird beispielsweise sichergestellt, dass im Falle von überlappenden Teilnehmergebieten, die Zuordnung zu dem Teilnehmergebiet mit der höchsten Priorität vorgenommen wird.

Die oben beschriebene Berechnungsmethode kann vorteilhafterweise für die Bestimmung eines korrekten Tarifs und insbesondere bei der Gebührenermittlung verwendet werden.

Wird gemäß Anspruch 24 ständig angezeigt, welches Teilnehmergebiet aktiviert ist, so wird dem Teilnehmer signalisiert, mit welchem Teilnehmergebiet und entsprechender Verwendungspriorität er eine Kommunikation aufbauen würde.

Wird gemäß Anspruch 25 gewährleistet, dass wenn sich die Nutzereinheit innerhalb des Teilnehmergebietes befindet eine Weiterleitung der ankommenden Information erfolgt, beispielsweise an einen Anrufbeantworter oder an eine sogenannte Voice-Mail, so wird sichergestellt, dass derjenige, der den Teilnehmer erreichen möchte, seine Information ihm übermitteln konnte.

Wird gemäß Anspruch 26 bereitgestellt, dass die Festlegung der Teilnehmerbereiche mehrfach und/oder mit unterschiedlichen Funkzellen vorgenommen werden kann, so kann beispielsweise individuell auf die Bedürfnisse des Teilnehmers eingegangen werden bzw. bei sich ändernden Ausgangsbedingungen können die einzelnen Untereinheiten ohne großen technischen Aufwand angepasst werden.

Weitere vorteilhafte Ausführungsformen sind Gegenstand der übrigen Unteransprüche.

Im Folgenden soll anhand der beigefügten Zeichnungen vorteilhafte Ausführungsformen des anmeldungsgemäßen Gegenstandes zum besseren Verständnis detaillierter beschrieben werden.

Fig. 1 zeigt eine Gesamtübersicht der anmeldungsgemäßen Zuordnung der Teilnehmergebiete innerhalb eines Gesamtgebietes.

Fig. 2 zeigt schematisch die Überprüfung, wann eine mobile Nutzereinheit innerhalb eines Teilnehmergebietes liegt;

Fig. 3 zeigt schematisch die Möglichkeiten sowohl eine geographische Rufnummer als auch eine mobile Teilnehmerrufnummer einer mobilen Nutzereinheit zuzuordnen.

Fig. 4 zeigt die Verwendungsmöglichkeiten aufgrund der anmeldungsgemäßen Zuordnung mit zwei Nutzereinheiten innerhalb eines Teilnehmergebietes;

Fig. 5 zeigt die Verwendungsmöglichkeiten, wenn eine Nutzereinheit innerhalb des Teilnehmergebietes und eine Nutzereinheit außerhalb des Teilnehmergebietes ist,

Fig. 6 zeigt den Fall, wenn beide mobile Nutzereinheiten außerhalb des Teilnehmergebietes vorliegen.

Fig. 7 zeigt ein Flussdiagramm, welches die Aktivierungsprozedur darstellt.

Fig. 8 zeigt ein Flussdiagramm bei Verwendung mehrerer Teilnehmergebiete mit Hilfsspeicher;

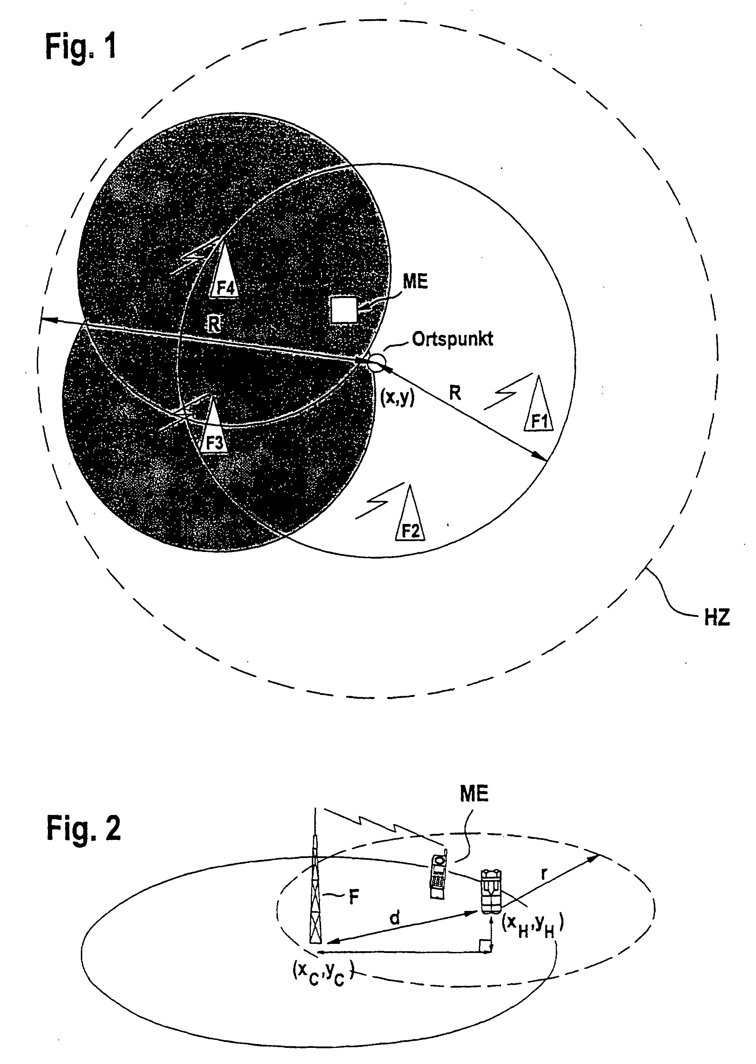

In Fig.1 ist allgemein gezeigt, wie das anmeldungsgemäße Kommunikationssystem arbeitet. Innerhalb eines Gesamtgebietes I, welches nationalen Grenzen entsprechen kann, wird ein Teilnehmergebiet (HZ; gestrichelte Linie) ausgewählt, welches durch einen Ortspunkt (x, y) mit einem Radius r1 definiert wird. Innerhalb dieses Teilnehmergebietes HZ befinden sich in der Regel mehrere Funkzellen F1, F2, F3, F4, wobei für zwei Funkzellen F3 und F4 jeweils deren Abdeckungsbereich dunkel dargestellt ist. In dem in Fig. 1 dargestellten Fall befindet sich die Nutzereinheit nicht deckungsgleich beim Ortspunkt. Würde sich die Nutzereinheit ME permanent, ähnlich einer Feststation an der mit dem Quadrat gekennzeichneten Stelle befinden, so würde die Kommunikation bzw. Informationsübertragung durch die Funkzelle F4 erfolgen. In dem Fall aber, in dem sich die Nutzereinheit ME innerhalb des Teilnehmergebietes bewegt, wird die Informationsübermittlung jeweils von einer Funkzelle zur anderen Funkzelle übergeben, welches später detailliert beschrieben wird. Aus der Fig. 1 ist ebenso erkennbar, dass aufgrund der Verteilung der Funkzellen bzw. der Funkzellendichteverteilung neben dem aktuellen Teilnehmergebiet, welches beispielsweise als sogenannte "Home Zone" bezeichnet werden kann, eine sogenannte logische "Home Zone" definiert werden, welche sich lediglich auf einen Bereich erstreckt, innerhalb dem alle normalerweise innerhalb des gesamten Teilnehmergebietes befindlichen Funkzellen liegen. Grundsätzlich sei aber hier angemerkt, dass dem Teilnehmer lediglich die aktuelle "Home Zone" bzw. das aktuelle Teilnehmergebiet mitgeteilt wird. Innerhalb dieses Teilnehmergebietes kann somit dem Teilnehmer ein spezieller Tarif angeboten werden.

In Fig. 2 ist veranschaulicht, wie die Überprüfung vorgenommen wird, ob eine Nutzereinheit sich innerhalb eines Teilnehmergebietes bzw. Home Zone befindet. Hierzu werden die x- bzw. y-Koordinaten des Ortspunktes $(x_H, y_H)$ zusammen mit dem das Teilnehmergebiet bzw. Home Zone festlegenden Radius r, welche beispielsweise in dem Teilnehmerkenndatenmodul (SIM) in der mobilen Nutzereinheit gespeichert sind, herangezogen. Die Überprüfung, ob die Nutzereinheit innerhalb des Teilnehmergebiets vorliegt, erfolgt nun dadurch, dass die x- bzw. y-Koordinaten $(x_C, y_C)$ der für die Übertragung verantwortlichen Funkzelle F herangezogen, welche beispielsweise aus den Parametern beispielsweise der standardisierten Übertragung entnommen werden können. Da diese Werte dann ebenfalls bei der Nutzereinheit vorliegen, kann die Nutzereinheit eigenständig und ohne zusätzliche Informationen, welche von der Vermittlungseinheit übertragen werden muss, selbständig überprüfen, ob die Nutzereinheit innerhalb des Teilnehmergebietes vorhanden ist. Die Überprüfung erfolgt, indem jeweils koordinatenweise die Differenz gebildet wird, und der Betrag dieser Differenzen vorab verglichen werden, ob der Differenzbetrag größer eines vorgegebenen Wertes beispielsweise 100 km ist. Fällt diese Überprüfung negativ aus, wird ferner der Abstand zwischen dem Ortspunkt und der Funkzelle berechnet, indem koordinatenweise das Quadrat der Differenzbeträge gebildet wird (Satz von Pythagoras) und der sich ergebende quadratische Wert mit dem in dem Teilnehmerkenndatenmodul gespeicherten Quadrat des Ortsradius verglichen werden. Ist das berechnet Abstandsquadrat $d^2$ kleiner/gleich dem Quadrat des Ortsradius $r^2$, so befindet sich die Nutzereinheit innerhalb des Teilnehmergebietes. Anhand dieses Berechnungsbeispiels wird ersichtlich, dass es vorteilhaft ist, neben den Koordinaten des Ortspunktes auch das Quadrat des Ortsradius für das Teilnehmergebiet in dem Teilnehmerkenndatenmodul zu speichern, damit das Teilnehmerkenndatenmodul (SIM) keine zusätzliche Berechnung, d.h. Bilden des Quadrats des Ortsradius, ausführen muss.

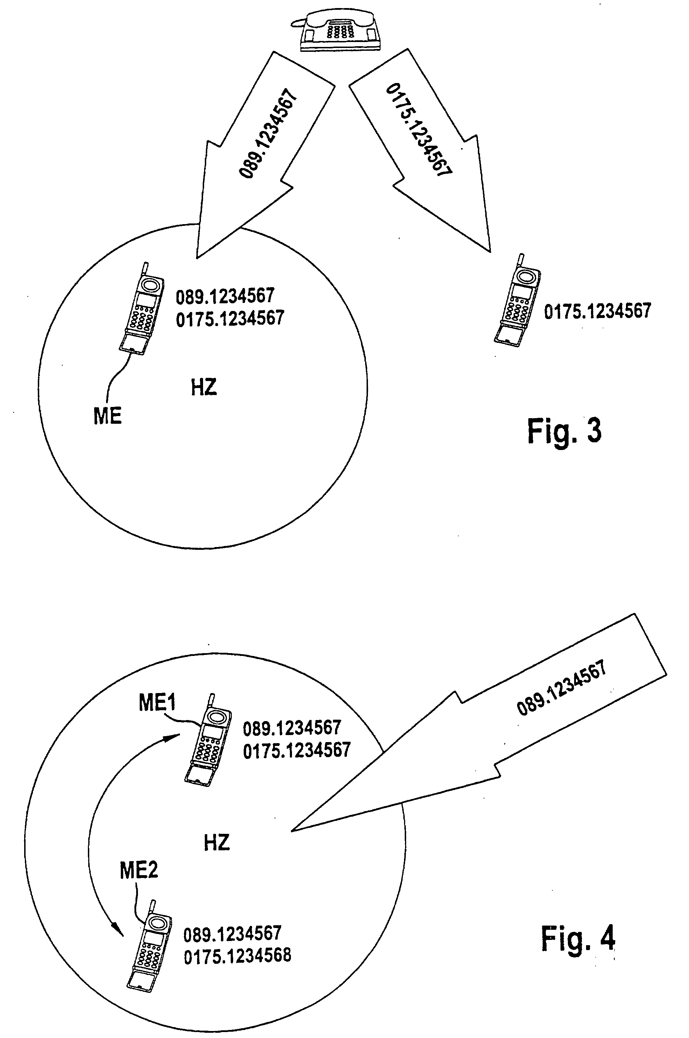

In Fig. 3 ist der Fall dargestellt, wenn der Teilnehmer seine bisherige geographische Rufnummer weiterhin, zusätzlich zu seiner mobilen Teilnehmerrufnummer für eine mobile Nutzereinheit verwenden möchte. Aufgrund dieser doppelten Zuordnung macht es für diejenigen, welche den Teilnehmer erreichen möchten, keinen Unterschied, ob sie die geographische Rufnummer oder die mobile Teilnehmerrufnummer wählen, wenn die mobile Nutzereinheit ME sich innerhalb des Teilnehmergebietes HZ befindet. Demgegenüber wird demjenigen, der den Teilnehmer anruft, signalisiert, ob beispielsweise der Teilnehmer sich innerhalb des Teilnehmergebietes aufhält, wenn er auf einen Anruf über die geographische Rufnummer antwortet. Aufgrund dieser Verwendungsmöglichkeit kann eine Umstellung ohne weitere Probleme beispielsweise von der Festnetzstation gänzlich zu dem Mobilfunknetz vorgenommen werden, ohne dass zusätzliche Änderungen für den Teilnehmer, er behält beide Rufnummern, erkennbar durchgeführt werden müssen.

Eine weitere Anwendungsmöglichkeit ist in Fig. 4 dargestellt, wenn beispielsweise eine Partnerkonfiguration erwünscht ist, dass heißt, zwei Nutzereinheiten sind sowohl mit der geographischen Rufnummer bzw. der mobilen Teilnehmerrufnummer erreichbar. Erfolgt beispielsweise ein Anruf über die geographische Rufnummer, so werden je nach Voreinstellung entweder beide Nutzereinheiten gleichzeitig reagieren oder aber einer der Nutzereinheiten wurde eine Referenz zugeteilt, an die der Anruf von außerhalb zuerst zuzuleiten ist. Aufgrund des anmeldungsgemäßen Kommunikationssystems ist es in diesem Fall möglich, dass beispielsweise die Weiterschaltung von der einen Nutzereinheit ME1 zu der anderen Nutzereinheit ME2 innerhalb des Teilnehmergebietes kostenlos erfolgen kann, da für jede Nutzereinheit jeweils ständig die Abfrage vorgenommen wird, ob sie sich innerhalb des Teilnehmergebietes HZ befinden. Unabhängig von einem externen Anruf können bei dieser Partnerkonfiguration den Teilnehmern ein besonderer Service dahingehend angeboten werden, dass beispielsweise ein Telefonat innerhalb des Teilnehmergebietes HZ kostenlos erfolgen kann.

Die beiden Nutzereinheiten können demgegenüber aber auch so geschaltet sein, dass jede Nutzereinheit von Hause aus zwei unterschiedliche mobile Teilnehmerrufnummern aufweist, aber mit der gleichen geographischen Rufnummer angesprochen werden können. Mit dieser Variante wird beispielsweise denjenigen, welche direkt den einen oder anderen Partner ansprechen wollen, die Möglichkeit gegeben, entweder durch Auswahl der geographischen Rufnummer beide Partner gleichzeitig auswählen zu können, oder aber durch Auswahl der individuellen mobilen Teilnehmerrufnummer gezielt den einzelnen Partner anzusprechen. Auch in diesem Fall ist eine Weiterschaltung zwischen den beiden mobilen Nutzereinheiten möglich, wenn eines der beiden Nutzereinheiten nicht reagiert.

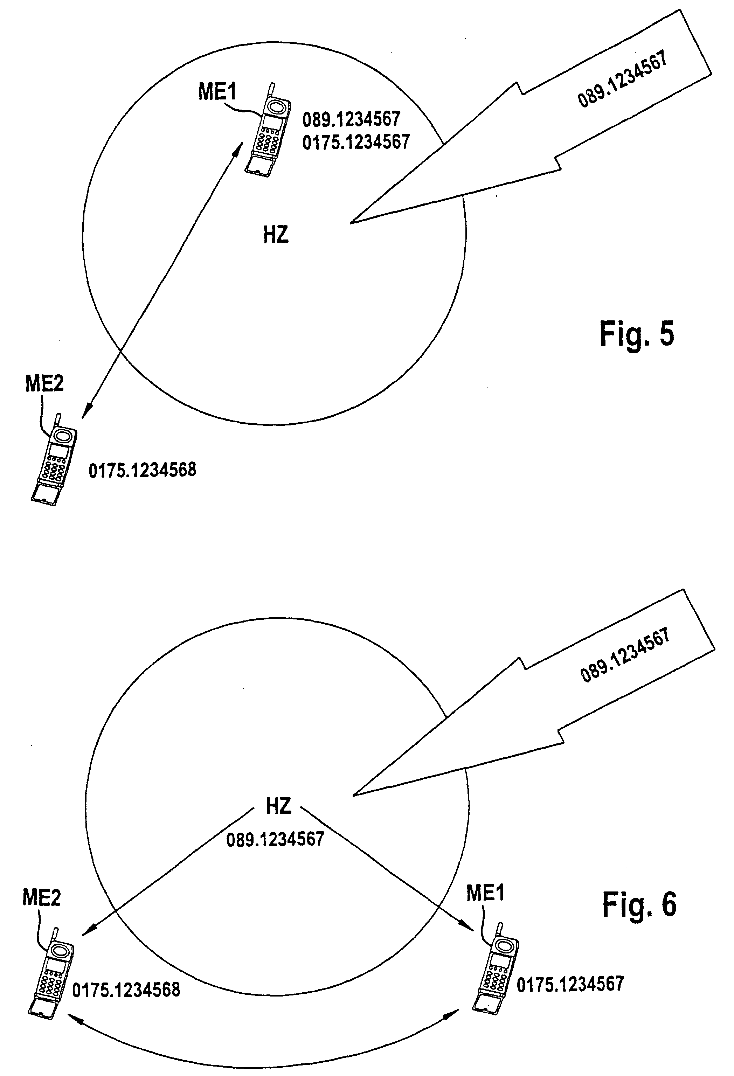

In Fig. 5 ist der Fall beschrieben, wenn beispielsweise einer der Partner innerhalb des Teilnehmergebietes HZ ist und der andere Partner außerhalb des Teilnehmergebietes. Wird in diesem Fall beispielsweise die geographische Rufnummer ausgewählt, so wird die mobile Nutzereinheit ME 1 ansprechen. Sollte an dieser mobilen Nutzereinheit keine Reaktion erfolgen, so kann nach einer vorgegebenen Zeitspanne bzw. vorgegebenen Anzahl von Signalen das Gespräch an die zweite mobile Nutzereinheit ME2 weitergeleitet oder an eine für dieses Teilnehmergebiet aktive Voice-Mail weitergeleitet werden.

Aufgrund des anmeldungsgemäßen Kommunikationssystems wird somit erreicht, dass durch die Zuordnung eines Teilnehmergebietes die Tarifzuordnung exakt gesteuert werden kann und dem Teilnehmer weitestgehend Freiheit dahingehend zugestanden wird, wann und bei welcher Konfiguration er kommunizieren möchte.

In Fig. 6 ist der Fall dargestellt, bei dem beide Nutzereinheiten sich außerhalb des Teilnehmergebietes aufhalten. Dennoch kann aufgrund der geographischen Rufnummer entweder durch Aktivierung der Voice-Mail oder durch Weiterleitung mittels herkömmlicher Weiterleitungsprozeduren entweder an beide mobile Nutzereinheiten der Anruf weitergeleitet werden, wenn beide Nutzereinheiten die gleiche mobile Teilnehmerrufnummer aufweisen, oder aber lediglich an eine vorausgewählte Nutzereinheit weitergeleitet werden, wenn die Partner-Nutzereinheiten unterschiedliche mobile Teilnehmerrufnummern haben.

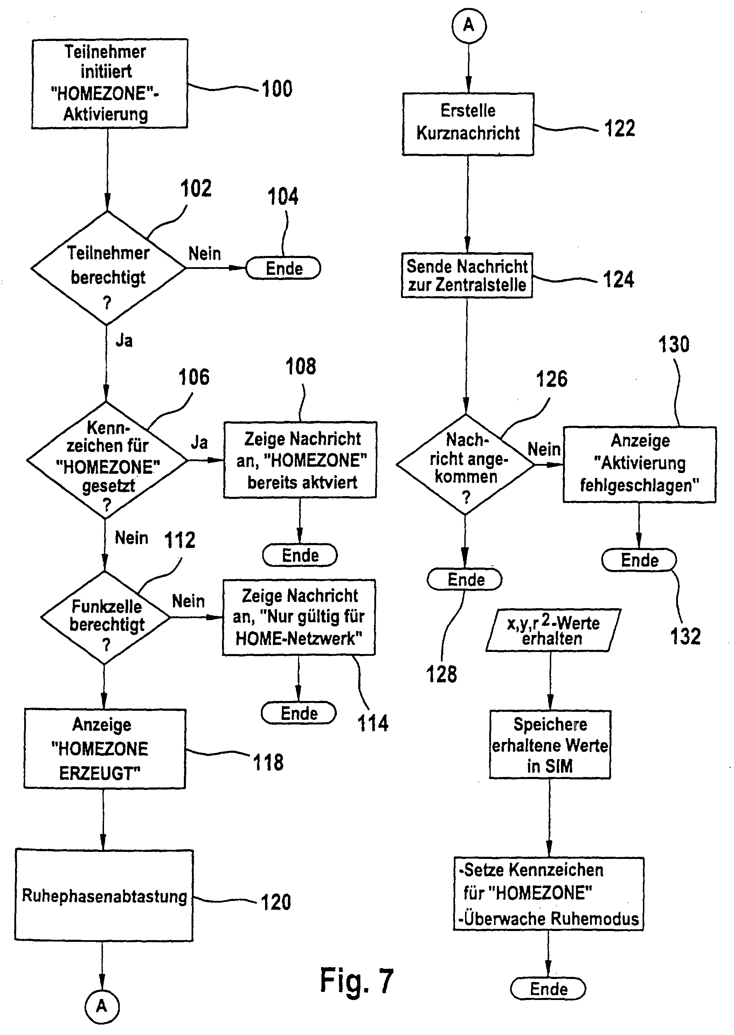

In Fig. 7 ist ein Flussdiagramm dargestellt, welches die Aktivierung des Teilnehmergebietes bzw. der "Homezone" HZ gemäß einer vorteilhaften Ausführungsform zeigt.

Ausgangspunkt ist hierbei, dass die Aktivierung von der Nutzereinheit selbst vorgenommen wird. Die Aktivierungsprozedur wird durch Auswahl des Aktivierungsprogramms innerhalb des Menüs der Nutzereinheit gestartet (Schritt 100). Nach Initiierung wird bei Schritt 102 überprüft, ob der Teilnehmer berechtigt ist, das anmeldungsgemäße Kommunikationssystem zu aktivieren, das heißt, der Teilnehmer bereits bei der Vermittlungseinheit angezeigt hat, dass er das anmeldungsgemäße Kommunikationssystem verwenden möchte. Sollte diese Überprüfung negativ sein, so wird die Aktivierungsprozedur im Schritt 104 beendet. Bejahendenfalls wird bei Schritt 106 überprüft, ob bereits ein erstes Kennzeichen gesetzt ist, welches anzeigt, dass das Teilnehmergebiet bereits ausgewählt wurde. Bejahendenfalls wird dem Teilnehmer über die Nutzereinheit signalisiert (Schritt 108), dass bereits ein Teilnehmergebiet ausgewählt wurde. Darauffolgend wird die Aktivierungsprozedur im Schritt 110 beendet. Wird die Überprüfung im Schritt 106 verneint, so wird bei Schritt 112 überprüft, ob im Teilnehmerkenndatenmodul eine Berechtigung für die Verwendung der entsprechenden Vermittlungseinheit vorhanden ist. Wird diese Überprüfung verneint, so wird dem Teilnehmer von der Nutzereinheit signalisiert, dass die Aktivierungsprozedur nur innerhalb des von der Vermittlungseinheit vorgegebenen Netzwerkes möglich ist (Schritt 114). Darauffolgend wird die Aktivierungsprozedur mit Schritt 116 beendet.

Wird die Überprüfung im Schritt 112 bejaht, wird dem Teilnehmer an der Nutzereinheit signalisiert, dass die Zuordnung des Teilnehmergebietes vorgenommen wird und so lange anhält, bis die Teilnehmergebietsparameter empfangen werden (Schritt 118). Nach erfolgreicher Zuordnung wird im Schritt 120 abgetastet, welche Funkzellen sich innerhalb des Teilnehmergebietes befinden. Vorzugsweise wird das Teilnehmergebiet danach definiert, bis etwa sechs Funkzellen aufgefunden werden. Können keine sechs Funkzellen aufgefunden werden, so kann dem Teilnehmer signalisiert werden, dass die Zuordnung für ein Teilnehmergebiet nicht erfolgreich war. Nach Festlegung des Teilnehmergebietes wird das Teilnehmergebiet zusammen mit den aufgefundenen Funkzellen mittels einer Kurzinformation an eine Zentralstelle der Vermittlungseinheit übermittelt (Schritt 122 und 124). In Schritt 126 wird dann überprüft, ob die Kurzinformation erfolgreich übermittelt wird. Bejahendenfalls wird die Aktivierungsprozedur bei Schritt 128 beendet, andernfalls wird im Schritt 130 dem Teilnehmer signalisiert, dass die Aktivierung fehlgeschlagen ist und bei Schritt 132 beendet wurde. In dem Fall, in dem die Aktivierung nicht erfolgreich durchgeführt werden konnte, werden von der Vermittlungseinheit 2 Kurzinformationen zu der mobilen Nutzereinheit gesendet, wobei die erste Daten, mit den alten x-, y- bzw. r-Daten enthält.

Nachdem das Teilnehmergebiet festgelegt wurde, werden gleichzeitig in der Nutzereinheit, die x- bzw. y-Koordinaten sowie das Quadrat des Ortsradius des ausgewählten Teilnehmergebietes in dem Teilnehmerkenndatenmodul (SIM) gespeichert und das erste Kennzeichen, welches angibt, ob ein Teilnehmergebiet bereits ausgewählt wurde, wird aktiv gesetzt.

An dieser Stelle soll hervorgehoben werden, dass nach Aktivierung sowohl im aktiven Modus als auch im Ruhemodus der Nutzereinheit ständig überprüft wird, ob die Nutzereinheit sich innerhalb des Teilnehmergebietes befindet.

Eine Neudefinierung bzw. Neuzuordnung des Teilnehmergebietes ist vorteilhafterweise nur dann möglich, wenn der Teilnehmer sich mit der Vermittlungseinheit in Verbindung setzt, welche dann die entsprechenden Parameter zurücksetzt, um eine neue Aktivierung an einer anderen Stelle zu ermöglichen. Für diesen Fall sendet die Vermittlungseinheit ebenfalls die Grundeinstellwerte für die x- bzw. y- und $r^2$-Werte, löscht alle zugeordneten Funkzellen für dieses Teilnehmergebiet und deaktiviert das zweite Kennzeichen, so dass der Teilnehmer an anderer geographischer Stelle ein neues Teilnehmergebiet aktivieren kann.

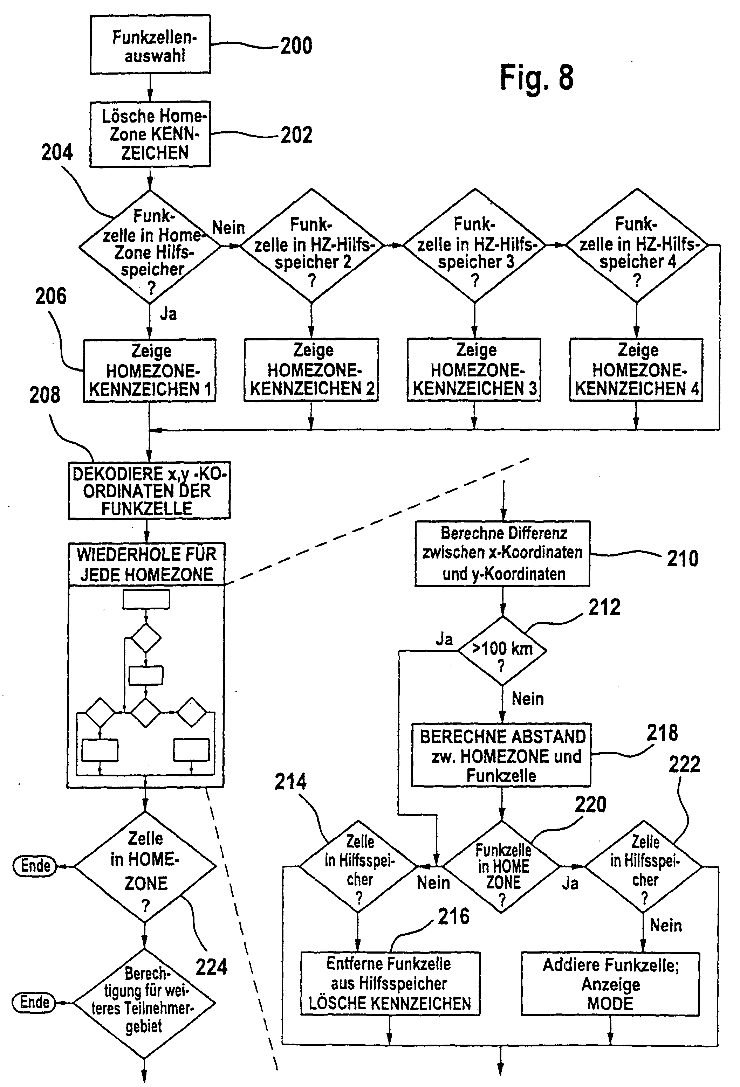

In Fig. 8 ist ein Flussdiagramm gezeigt, welches den Ablauf zeigt, wenn im Ruhemodus überprüft wird, ob sich die Nutzereinheit innerhalb des vorausgewählten Teilnehmergebietes befindet. Ausgangspunkt dieses Flussdiagramms ist die ständige Abfrage, ob aufgrund einer Bewegung der Nutzereinheit ein Wechsel zu einer neuen Funkzelle stattgefunden hat, d.h. eine neue Funkzellenauswahl vorliegt (Schritt 200). In Schritt 202 wird vorerst die Anzeige in der Nutzereinheit gelöscht, welche anzeigt, ob sich die Nutzereinheit innerhalb des Teilnehmergebietes befindet. Das in Fig. 8 dargestellte Flussdiagramm verwendet das anmeldungsgemäße Kommunikationssystem mit vorzugsweise 4 Hilfsspeichem, welche jeweils einem Teilgebiet zugeordnet sind. In Schritt 204 wird überprüft, ob die neue Funkzelle bereits in dem ersten Hilfsspeicher mit der höchsten Priorität enthalten ist. Bejahendenfalls wird in Schritt 206 angezeigt, dass die Nutzereinheit dem ersten Teilnehmergebiet, welches der neuen Funkzelle entspricht, zugeordnet wurde. Sollte die Abfrage in Schritt 204 negativ sein, so wird überprüft ob die neue Funkzelle in dem zweiten Hilfsspeicher abgelegt wurde.

Bejahendenfalls wird angezeigt, dass die Nutzereinheit nunmehr für das weitere erste Teilnehmergebiet aktiviert wird. Ist dieser Abfragemodus mit den Schritten 204, 206 für jedes Teilnehmergebiet bzw. Home Zone durchgeführt worden, werden die x- bzw. y-Koordinaten der neuen Funkzelle aus dem standardisierten Übertragungssignal decodiert (208). In Schritt 210 wird für jede zugeordnete Home Zone bzw. Teilnehmergebiet koordinatenweise die Differenz zwischen dem Ortspunkt und der neuen Funkzelle in Schritt 210 berechnet. In Schritt 212 wird überprüft, ob der Betrag der Differenz größer eines vorgegebenen Wertes, beispielsweise 100 km, ist. Bejahendenfalls wird überprüft, ob die neue Zelle in den Hilfsspeicher bei Schritt 214 abgelegt ist. Bejahendenfalls wird die neue Zelle aus dem Hilfsspeicher entfernt und das erste Kennzeichen des Teilnehmergebietes gelöscht. Wird im Schritt 212 festgestellt, dass einer der Differenzbeträge nicht größer als 100 km ist, wird der Abstand zwischen dem Ortspunkt und der Funkzelle berechnet (218). Danach wird Schritt 220 überprüft, ob die Funkzelle in dem Teilnehmergebiet vorhanden ist. Wird diese Abfrage verneint, so wird zu Schritt 214 weiterverfahren. Wird die Überprüfung in Schritt 220 bejaht, wird überprüft ob die Zelle in dem Hilfsspeicher abgelegt ist (Schritt 222). Wird diese Abfrage verneint, wird diese Funkzelle zu dem Hilfsspeicher addiert und angezeigt, dass die Funkzelle innerhalb des Teilnehmergebietes ist. Wird die Abfrage in Schritt 222 bejaht, wird bei Schritt 224 weiterfortgefahren. In Schritt 224 wird überprüft, ob die neue Zelle innerhalb des Teilnehmergebietes bzw. der Home Zone ist. Bejahendenfalls wird das Flussdiagramm beendet.

An dieser Stelle kann ebenso weiter fortgefahren werden, wenn beispielsweise weitere zweite Teilnehmergebiete definierbar sind beispielsweise Teilnehmergebiete, wie Cityzone bzw. Officezone welche mehrere zuvor definierte Teilnehmergebiete umfassen kann. In diesem Fall wird standardisiert überprüft, ob der Teilnehmer für die weiteren zweiten Teilnehmergebiete berechtigt ist.

Je nach Funkzellendichte hat sich herausgestellt, dass die Teilnehmergebiete im Mittel_ einen Durchmesser von ca. 500-1000 Meter haben können.

Es soll an dieser Stelle hervorgehoben werden, dass die in den Figuren 4 bis 6 gezeigten Anwendungsmöglichkeiten für 2 Nutzereinheiten ebenso für mehrere Nutzereinheiten gleichermaßen gelten.

**Patentansprüche**

1. Kommunikationssystem für den Mobilfunk bestehend aus zumindest einer Vermittlungseinheit, welche ein vorgegebenes Gesamtgebiet bedient, wobei innerhalb dieses Gesamtgebietes zumindest ein Teilnehmergebiet festgelegt wird, dem zumindest eine Teilnehmerrufnummer zugeordnet ist, **dadurch gekennzeichnet,**

**dass** in dem Gesamtgebiet wenigstens eine Funkzelle angeordnet ist, die ein deren Koordinaten enthaltendes Signal übermittelt, und dass Mittel vorgesehen sind, mittels derer berechnet wird, ob die seitens der für die Übertragung verantwortlichen Funkzelle übermittelten Koordinaten innerhalb des festgelegten Teilnehmergebietes liegen.

2. Kommunikationssystem nach Anspruch 1, wobei vier Teilnehmergebiete vorgesehen sind, und vorzugsweise das erste Teilnehmergebiet einem Heimbereich des Nutzers und das zweite Teilnehmergebiet einem Geschäftsbereich des Nutzers zugeordnet ist.

3. Kommunikationssystem nach Anspruch 1 oder 2, wobei bei mehreren ausgewählten Teilnehmergebieten die einzelnen Teilnehmergebiete überlappen können.

4. Kommunikationssystem nach einem der Ansprüche 2 oder 3 , wobei die Teilnehmergebiete unterschiedliche Verwendungsprioritäten aufweisen.

5. Kommunikationssystem nach einem der Ansprüche 1 bis 4, wobei das Teilnehmergebiet in das Teilnehmerkenndatenmodul (SIM) eingeschrieben wird.

6. Kommunikationssystem nach einem der Ansprüche 1 bis 5, wobei das Teilnehmergebiet mehrere Funkzellen umfasst und/oder mehrere Nutzereinheiten bedient.

7. Kommunikationssystem nach einem der Ansprüche 1 bis 6, wobei eine erste Teilnehmerrufnummer für die mobile Teilnehmerrufnummer und eine zweite Teilnehmerrufnummer für eine geographische Rufnummer vorgesehen ist.

8. Kommunikationssystem nach Anspruch 7, wobei zumindest ein Speicherbereich (cache) für das Teilnehmergebiet auf dem Teilnehmerkenndatenmodul vorgesehen ist.

9. Kommunikationssystem nach einem der Ansprüche 1 bis 8, wobei das Teilnehmergebiet durch einen Ortspunkt und einen Ortsradius festgelegt wird.

10. Kommunikationssystem nach Anspruch 9, wobei die Bestimmung des Ortsradius durch Abtasten mehrerer Funkzellen, welche in der Umgebung des Ortspunktes liegen, erfolgt, und der Betrag des Ortsradius in Abhängigkeit der Empfangsstärke festgelegt wird.

11. Kommunikationssystem nach einem der Ansprüche 1 bis 10, wobei innerhalb des Teilnehmergebiets zusätzlich eine Feststation bzw. mehrere Feststationen vorgesehen ist.

12. Kommunikationssystem nach Anspruch 11, wobei der Ortspunkt mit der Position der Feststation übereinstimmt.

13. Kommunikationssystem nach einem der Ansprüche 1 bis 12, wobei in der Nutzereinheit eine Anzeigevorrichtung vorgesehen ist, die anzeigt, ob sich die Nutzereinheit innerhalb des Teilnehmergebietes befindet.

14. Kommunikationssystem nach einem der Ansprüche 1 bis 13, wobei das globale System zur mobilen Kommunikation (GSM) verwendet wird.

15. Kommunikationssystem nach Anspruch 14, wobei ein erstes und ein zweites Kennzeichen vorgesehen sind, und das erste Kennzeichen signalisiert, ob die Nutzereinheit für das Teilnehmergebiet berechtigt ist, und das zweite Kennzeichen signalisiert, ob bereits eine Festlegung auf das Teilnehmergebiet erfolgt ist.

16. Verfahren zum Betreiben eines Kommunikationssystems für den Mobilfunk, insbesondere unter Verwendung des Kommunikationssystems nach einem der Ansprüche 1 bis 15, welches die folgenden Schritte aufweist: Bereitstellen einer Vermittlungseinheit mit einem Gesamtgebiet, Festlegen zumindest eines Teilnehmergebietes innerhalb dieses Gesamtgebietes und Zuordnen zumindest einer Teilnehmerrufnummer für das Teilnehmergebiet, **dadurch gekennzeichnet,**
**dass** in dem Gesamtgebiet wenigstens eine Funkzelle angeordnet ist, die ein deren Koordinaten enthaltendes Signal übermittelt, und dass berechnet wird, ob die Koordinaten der für die Übertragung verantwortlichen Funkzelle innerhalb des festgelegten Teilnehmergebietes liegen.

17. Verfahren nach Anspruch 16, wobei die Festlegung des Teilnehmergebiets von der Vermittlungseinheit erfolgt.

18. Verfahren nach Anspruch 17, wobei die Festlegung des Teilnehmergebiets durch

a) Angabe eines Ortspunkts, beispielsweise Straßenname;

b) Bestimmung des Betrag des Ortradius unter Verwendung eines graphischen Informationssystems (GIS) mit einer die Ortspunkten enthaltenen Datenbank und unter Beachtung der Tatsache, dass innerhalb des Ortsradius mehrere Funkzellen enthalten sind; und

c) Speicherung des Ortspunktes und des Ortsradius in einer Datei der Vermittelungseinheit; und

d) Übermittelung des Ortspunktes und des Ortsradius zum Teilnehmerkenndatenmodul der Nutzereinheit erfolgt.

19. Verfahren nach Anspruch 16, wobei die Festlegung des Teilnehmergebiets durch die Nutzereinheit erfolgt.

20. Verfahren nach Anspruch 19, wobei die Festlegung des Teilnehmergebiets durch

a) Überprüfen eines ersten und eines zweiten Kennzeichens, und das erste Kennzeichen signalisiert, ob die Nutzereinheit für das Teilnehmergebiet berechtigt ist, und das zweite Kennzeichen signalisiert, ob bereits eine Festlegung auf das Teilnehmergebiet erfolgt ist;

b) Auswählen der um die Nutzereinheit vorhandenen Funkzellen nach deren Signalstärken;

c) Aufzeichnen der momentan zur Vermittelung herangezogenen Funkzelle;

d) Bestimmen der Ortsnetzkennzahl und der Zellenkennzahl (Cell-ID) aufgrund der aufgezeichneten Funkzelle;

e) Übermittelung der Ortskennzahl und der Zellenkennzahl an einen Sammelpunkt der Ver-mittelungseinheit und gleichzeitiger Speiche-rung der Adresse des Sammelpunkts in dem Teilnehmerkenndatenmodul (SIM).

f) Bestimmen des Ortspunktes und des Ortsradius anhand einer in dem Sammelpunkt vorgesehenen Datei, welche alle Funkzellen enthält;

g) Erzeugen einer Teilnehmerdatei innerhalb des Sammelpunkts, welche einem Schreibschutz unterworfen wird;

h) Übermitteln des Ortpunktes und des Ortra-dius zum Teilnehmerkenndatenmodul der Nut-zereinheit

i) Aktualisieren des auf der Nutzereinheit gespeicherten Ortspunktes und Ortsradius.

21. Verfahren nach einem der Ansprüche 18 oder 20, wobei das Quadrat des Ortsradius an das Teilnehmerkenndatenmodul übermittelt wird.

22. Verfahren nach einem der Ansprüche 16 bis 21, wobei angezeigt wird, ob sich die Nutzereinheit in dem Teilnehmergebiet befindet.

23. Verfahren nach Anspruch 22, bei dem überprüft wird, ob eine neue Funkzelle innerhalb eines vorgegebenen Teilnehmergebiets liegt.

24. Verfahren nach Anspruch 23, wobei angezeigt wird, welches Teilnehmergebiet aktiviert ist.

25. Verfahren nach einem der Ansprüche 16 bis 21, bei dem eine Weiterleitung der ankommenden Information erfolgt, wenn die Nutzereinheit sich außerhalb des Teilnehmergebietes befindet.

26. Verfahren nach einem der Ansprüche 16 bis 25, wobei die Festlegung der Teilbereiche mehrfach und/ oder mit unterschiedlichen Funkzellen vorgenommen werden kann.

27. Verfahren nach einem der Ansprüche 16 bis 26, wobei für ein Teilnehmergebiet zwei Teilnehmerrufnummern zugeordnet sind.

**Claims**

1. A communication system for a mobile radio telephone system consisting of at least one network unit, which serves a predetermined overall area, wherein at least one subscriber area within this overall area is stipulated and has allocated to it at least one subscriber number, **characterized in that** at least one radio cell is arranged in the overall area, which transmits a signal containing its coordinates, and that means are provided for calculating whether the coordinates transmitted by the radio cell responsible for transmission lie within the stipulated subscriber area.

2. The communication system according to claim 1, wherein four subscriber areas are provided, with the first subscriber area preferably being allocated to a home location of the user, and the second subscriber area preferably being allocated to a business location of the user.

3. The communication system according to claim 1 or 2, wherein the individual subscriber areas can overlap given several selected subscriber areas.

4. The communication system according to one of claims 2 or 3, wherein the subscriber areas have varying application priorities.

5. The communication, system according to one of claims 1 to 4, wherein the subscriber area is written into the subscriber code module (SIM).

6. The communication system according to one of claims 1 to 5, wherein the subscriber area encompasses several radio cells and/or serves several user units.

7. The communication system according to one of claims 1 to 6, wherein a first subscriber number is provided for the mobile subscriber number, and a second subscriber number is provided for a geographic number.

8. The communication system according to claim 7, wherein at least one storage area (cache) is provided for the subscriber area on the subscriber code module.

9. The communication system according to one of claims 1 to 8, wherein the subscriber area is stipulated by a location and local radius.

10. The communication system according to claim 9, wherein the local radius is determined by scanning several radio cells situated around the location, and the local radius is measured as a function of the reception strength.

11. The communication system according to one of claims 1 to 10, wherein a fixed station or several fixed stations is/are additionally provided within the subscriber area.

12. The communication system according to claim 11, wherein the location coincides with the position of the fixed station.

13. The communication system according to one of claims 1 to 12, wherein a display is provided in the user unit to indicate whether the user unit is located within the subscriber area.

14. The communication system according to one of claims 1 to 13, wherein the global system for mobile communication (GSM) is used.

15. The communication system according to claim 14, wherein a first and second code are provided, wherein the first code signals whether the user unit is authorized for the subscriber area, and the second code signals whether a stipulation has already taken place relative to the subscriber area.

16. A method for operating a communication system for a mobile radio telephone system, in particular using the communication system according to one of claims 1 to 15, which involves the following steps: providing a network unit with an overall area, stipulating at least one subscriber area within this overall area, and allocating at least one subscriber number for the subscriber area, **characterized in that** the overall area incorporates at least one radio cell that transmits a signal containing its coordinates, and that a calculation is performed to determine whether the coordinates for the radio cell responsible for transmission lie within the stipulated subscriber area.

17. The method according to claim 16, wherein the subscriber area is stipulated by the network unit.

18. The method according to claim 17, wherein the subscriber area is stipulated by

a) specifying a location, e.g., street name;
b) measuring the local radius using a graphic information system (GIS) with a database containing the locations and bearing in mind that the local radius contains several radio cells; and
c) storing the location and local radius in a network unit file; and
d) transmitting the location and local radius to the subscriber detection module of the user unit.

19. The method according to claim 16, wherein the subscriber area is stipulated by the user unit.

20. The method according to claim 19, wherein the subscriber area is stipulated by

a) checking a first and second code, wherein the first code signals whether the user unit is authorized for the subscriber area, and the second code signals whether a stipulation has already taken place relative to the subscriber area;
b) selecting the radio cells present around the user unit based on their signal strengths;
c) recording the radio cell currently used for switching;
d) determining the urban network code and cell code (cell ID)based on the recorded radio cell;
e) transmitting the urban network code and cell code to a centralized point of the network unit and simultaneously storing the address of the centralized point in a subscriber code module (SIM);
f) determining the location and local radius based on a file provided in the centralized point containing all the radio cells;
g) generating a subscriber file within the centralized point, which is write protected;
h) transmitting the location and local radius to the subscriber code module of the user unit;
i) updating the location and local radius stored on the user unit.

**21.** The method according to one of claims 18 to 20, wherein the square of the local radius is transmitted to the subscriber code module.

**22.** The method according to one of claims 18 to 21, wherein a display indicates whether the user unit is located in the subscriber area.

**23.** The method according to claim 22, wherein a check is performed to determine whether a new radio cell lies within a prescribed subscriber area.

**24.** The method according to claim 23, wherein a display indicates which subscriber area is activated.

**25.** The method according to one of claims 16 to 21, wherein the incoming information is relayed if the user unit is located outside the subscriber area.

**26.** The method according to one of claims 16 to 25, wherein the subscriber areas can be stipulated repeatedly and/or with various radio cells.

**27.** The method according to one of claims 16 to 26, wherein two subscriber calls are allocated for a subscriber area.

**Revendications**

**1.** Système de communication pour la radiotéléphonie mobile, constitué d'au moins une unité de commutation desservant une zone globale prédéfinie, au moins une zone d'abonnés à laquelle est affecté au moins un numéro d'abonné étant déterminée au sein de ladite zone globale **caractérisé en ce que** dans la zone globale est disposée au moins une cellule radioélectrique, transmettant un signal contenant ses coordonnées et **en ce que** des moyens permettant de calculer si les coordonnées transmises par la cellule responsable pour le transfert se situent à l'intérieur de la zone d'abonnés déterminée sont prévus.

**2.** Système de communication selon la revendication 1, quatre zones d'abonnés étant prévues et la première zone d'abonnés étant de préférence affectée à une zone domestique de l'utilisateur et la seconde zone d'abonnés étant de préférence affectée à une zone commerciale de l'utilisateur.

**3.** Système de communication selon l'une quelconque des revendications 1 ou 2, les zones individuelles d'abonnés pouvant se chevaucher lorsque plusieurs zones d'abonnés sont sélectionnées.

**4.** Système de communication selon l'une quelconque des revendications 2 ou 3, les zones d'abonnés présentant différentes priorités d'utilisation.

**5.** Système de communication selon l'une quelconque des revendications 1 à 4, la zone d'abonnés étant inscrite dans le module de données caractéristiques de l'abonné (SIM).

**6.** Système de communication selon l'une quelconque des revendications 1 à 5, la zone d'abonnés comprenant plusieurs cellules radioélectriques et / ou desservant plusieurs unités d'utilisateurs.

**7.** Système de communication selon l'une quelconque des revendications 1 à 6, un premier numéro d'appel d'abonné étant prévu pour le numéro d'appel mobile de l'abonné et un second numéro d'appel d'abonné étant prévu pour un numéro d'appel géographique.

**8.** Système de communication selon la revendication 7, au moins une zone de mémoire (cache) pour la zone d'abonnés étant prévue dans le module de données caractéristiques de l'abonné.

**9.** Système de communication selon l'une quelconque des revendications 1 à 8, la zone d'abonnés étant déterminée par un point local et par un rayon local.

**10.** Système de communication selon la revendication 9, la détermination du rayon local étant réalisée par balayage de plusieurs cellules radioélectriques situées dans l'environnement du point local et le montant du rayon étant déterminé en fonction de l'intensité de réception.

**11.** Système de communication selon l'une quelconque des revendications 1 à 10, un poste fixe, voire plusieurs postes fixes étant prévus en supplément à l'intérieur de la zone d'abonnés.

**12.** Système de communication selon la revendication 11, le point local concordant avec la position du poste fixe.

**13.** Système de communication selon l'une quelconque des revendications 1 à 12, un dispositif d'affichage indiquant si l'unité de l'utilisateur se situe à l'intérieur de la zone d'abonnés étant prévu dans l'unité de l'utilisateur.

**14.** Système de communication selon l'une quelconque des revendications 1 à 13, le système global étant utilisé pour la communication mobile (GSM).

**15.** Système de communication selon la revendication 14, une première et une seconde caractéristique étant prévues, la première caractéristique signalant si l'unité de l'utilisateur est habilitée pour la zone d'abonnés et la seconde caractéristique signalant si une détermination a eu lieu en ce qui concerne la zone d'abonnés.

16. Procédé d'exploitation d'un système de communication pour la radiotéléphonie mobile, notamment par utilisation du système de communication selon l'une quelconque des revendications 1 à 15, présentant les étapes suivantes : mise à disposition d'une unité de commutation avec une zone globale, définition d'au moins une zone d'abonnés à l'intérieur de ladite zone globale et affectation d'au moins un numéro d'appel d'un abonné à la zone d'abonnés, **caractérisé en ce que** dans la zone globale est disposée au moins une cellule radioélectrique transférant un signal contenant les coordonnées de cette dernière et **en ce qu'**on calcule si les coordonnées de la cellule radioélectrique responsable pour la transmission se situent à l'intérieur de la zone d'abonnés définie.

17. Procédé selon la revendication 16, la définition de la zone d'abonnés étant réalisée par l'unité de commutation.

18. Procédé selon la revendication 17, la définition de la zone d'abonnés étant réalisée par

a) indication d'un point local, par exemple un nom de rue,

b) définition du montant du rayon local, par utilisation d'un système d'information graphique (GIS) avec une banque de données contenant les point locaux et sous respect du fait que plusieurs cellules radioélectriques sont contenues dans le rayon local ; et

c) mémorisation du point local et du rayon local dans un fichier de l'unité de commutation ; et

d) transfert du point local et du rayon local vers le module de données caractéristiques de l'abonné.

19. Procédé selon la revendication 16, la définition de la zone d'abonnés étant réalisée par l'unité de l'utilisateur.

20. Procédé selon la revendication 19, la définition de la zone d'abonnés étant réalisée par

a) vérification d'une première et d'une seconde caractéristique, la première caractéristique signalant si l'unité de l'utilisateur est habilité pour la zone d'abonnés et la seconde caractéristique signalant si une définition concernant la zone d'abonnés a d'ores et déjà eu lieu ;

b) sélection des cellules radioélectriques présentes autour de l'unité de l'utilisateur, en fonction de l'intensité de leurs signaux.

c) enregistrement de la cellule radioélectrique momentanément mise à contribution pour la commutation ;

d) définition du chiffre caractéristique pour le réseau local et du chiffre caractéristique de la cellule (ID- cell), sur la base de la cellule radioélectrique enregistrée ;

e) transfert du chiffre caractéristique local et du chiffre caractéristique de la cellule à un point collectif de l'unité de commutation et mémorisation simultanée de l'adresse du point collectif dans le module des données caractéristiques de l'abonné (SIM).

f) définition du point local et du rayon local à l'aide d'un fichier prévu au point collectif et contenant toutes les cellules radioélectriques ;

g) création à l'intérieur du point collectif d'un fichier d'abonnés qui est protégé en écriture ;

h) transfert du point local et du rayon local au module des données caractéristiques de l'abonné de l'unité de l'utilisateur ;

i) mise à jour du point local et du rayon local.

21. Procédé selon l'une quelconque des revendications 18 ou 20, le carré du rayon local étant transféré au module de données caractéristiques de l'abonné.

22. Procédé selon l'une quelconque des revendications 16 à 21, dans lequel il est affiché si l'unité de l'utilisateur se trouve dans la zone d'abonnés.

23. Procédé selon la revendication 22, dans lequel il est vérifié si une nouvelle cellule radioélectrique se trouve à l'intérieur d'une zone d'abonnés prédéfinie.

24. Procédé selon la revendication 23, dans lequel il est affiché quelle zone d'abonnés est activée.

25. Procédé selon l'une quelconque des revendications 16 à 21, dans lequel une transmission ultérieure de l'information entrante a lieu si l'unité de l'abonné se situe à l'extérieur de la zone d'abonnés.

26. Procédé selon l'une quelconque des revendications 16 à 25, la définition des zones partielles pouvant être réalisée à plusieurs reprises et / ou avec différentes cellules radioélectriques.

27. Procédé selon l'une quelconque des revendications 16 à 26, deux numéros d'appel d'abonné étant affectés par zone d'abonnés.

**Fig. 1**

**Fig. 2**

089.1234567

0175.1234567

089.1234567
0175.1234567

0175.1234567

HZ

ME

Fig. 3

ME1

089.1234567
0175.1234567

089.1234567

HZ

ME2

089.1234567
0175.1234568

Fig. 4

Fig. 5

Fig. 6

Fig. 7

## Fig. 8

Funkzellen-auswahl — 200

Lösche Home-Zone KENN-ZEICHEN — 202

204 — Funkzelle in Home-Zone Hilfs-speicher ?

Nein → Funk-zelle in HZ-Hilfs-speicher 2 ?

→ Funk-zelle in HZ-Hilfs-speicher 3 ?

→ Funk-zelle in HZ-Hilfs-speicher 4 ?

Ja

206 — Zeige HOMEZONE-KENNZEICHEN 1

Zeige HOMEZONE-KENNZEICHEN 2

Zeige HOMEZONE-KENNZEICHEN 3

Zeige HOMEZONE-KENNZEICHEN 4

208 — DEKODIERE x,y -KO-ORDINATEN DER FUNKZELLE

WIEDERHOLE FÜR JEDE HOMEZONE

Berechne Differenz zwischen x-Koordinaten und y-Koordinaten — 210

212 — Ja >100 km ?

Nein

BERECHNE ABSTAND zw. HOMEZONE und Funkzelle — 218

220

222

Zelle in HOME-ZONE ?

Ende

Berech-tigung für wei-teres Teilnehmer-gebiet — 224

Ende

214 — Zelle in Hilfsspei-cher ?

Nein

Funkzelle in HOME ZONE ?

Ja

Zelle in Hilfsspei-cher ?

Nein

216 — Entferne Funkzelle aus Hilfsspeicher LÖSCHE KENNZEICHEN

Addiere Funkzelle; Anzeige MODE